Europäisches Patentamt

European Patent Office

Office européen des brevets

(11) Numéro de publication: **0 305 273 B1**

(12) **FASCICULE DE BREVET EUROPEEN**

(45) Date de publication de fascicule du brevet: **15.04.92**

(21) Numéro de dépôt: **88402111.4**

(22) Date de dépôt: **16.08.88**

(51) Int. Cl.⁵: **C08F 265/06**, C08F 279/02, C08F 291/02

(54) **Procédé de fabrication d'une résine thermoplastique résistante au choc.**

(30) Priorité: **20.08.87 FR 8711759**

(43) Date de publication de la demande:
**01.03.89 Bulletin 89/09**

(45) Mention de la délivrance du brevet:
**15.04.92 Bulletin 92/16**

(84) Etats contractants désignés:
**AT BE CH DE ES FR GB GR IT LI LU NL SE**

(56) Documents cités:
**EP-A- 0 160 285
FR-A- 2 103 059
US-A- 3 825 621
US-A- 3 862 913
US-A- 4 141 932**

(73) Titulaire: **ATOCHEM
4 & 8, Cours Michelet La Défense 10
F-92800 Puteaux(FR)**

(72) Inventeur: **Heim, Philippe
83, rue de Didenheim
F-68200 Mulhouse(FR)**
Inventeur: **Riess, Gérard
31, rue de Meunier
F-68200 Mulhouse(FR)**

(74) Mandataire: **Chaillot, Geneviève et al
Cabinet CHAILLOT 21, avenue Louise de Bettignies
F-92700 Colombes(FR)**

Rank Xerox (UK) Business Services

**Description**

La présente invention se rapporte à un procédé de fabrication d'une résine thermoplastique résistante au choc, ce procédé comportant une étape de transfert des particules d'un latex de renforcement dans les monomères de la matrice, par formation de complexes interpolymères déstabilisant le latex ; elle concerne également les résines thermoplastiques modifiées qui sont obtenues par ce procédé.

Les résines thermoplastiques résistant au choc sont obtenues de façon classique par mélange à chaud de la poudre résultant des étapes de coagulation, déshydratation et séchage d'un latex élastomère, avec les particules de la résine thermoplastique ou polymère «dur», ce qui conduit à ce que l'on appelle un «alliage». Ce procédé n'est satisfaisant ni du point de vue économique, ni du point de vue de la qualité de l'alliage.

Pour surmonter ces inconvénients, on a déjà proposé des procédés dans lesquels les étapes précitées de déshydratation et séchage sont supprimées et où l'on passe directement du stade émulsion du latex élastomère au stade polymérisation de la résine thermoplastique par ajout au latex élastomère d'électrolytes ou d'acides et du (ou des) monomère(s) non saturé(s) devant, après polymérisation, conduire à la matrice thermoplastique. Ces électrolytes ou acides sont des agents qui neutralisent l'effet stabilisant du tensio-actif ionique présent sur le latex élastomère et qui provoquent la floculation de celui-ci. Lorsque le (ou les) monomère(s) est (ou sont) ajouté(s) après l'agent déstabilisant, il y a gonflement plus ou moins rapide par le (ou les) monomère(s) et l'on peut ainsi terminer par une polymérisation en suspension. Lorsque le (ou les) monomère(s) est (ou sont) ajouté(s) avant l'agent déstabilisant, celui-ci va provoquer le transfert instantané des particules de latex dans le (ou les) monomère(s), conduisant à une phase organique contenant la dispersion caoutchouteuse polymérisable en suspension ou en masse. De telles techniques sont décrites dans les brevets japonais n° 82-36102, 78-44959, 81-50907, 74-02347, 74-11748, 74-11749, 79-18893, 75-31598, américains n° 4 141 932, 3 450 796 et 3 950 455, et allemand n° 2 524 471.

Toutefois, ces procédés nécessitent l'emploi de quantités importantes d'agents coagulants. En effet, les exemples du brevet japonais n° 75-31598 montrent que généralement une proportion d'environ 3% en poids de sulfate de magnésium, par rapport à la résine finale, est nécessaire pour déstabiliser le latex. En outre, la polymérisation en suspension s'avère délicate pour une quantité supérieure à 35% en poids par rapport à la résine finale, de particules élastomères comportant un greffage superficiel de polymère "dur" (particules greffées), en raison de la viscosité de la solution du (ou des) monomère(s) dans laquelle ces particules sont dispersées et gonflées.

En conséquence, des recherches ont été conduites pour proposer un procédé de production de résines thermoplastiques résistant au choc, modifiées par du caoutchouc, qui soit sensiblement exempt des inconvénients mentionnés ci-dessus.

Ce procédé, qui fait l'objet de la présente invention, conduisant à la production d'une résine thermoplastique résistante au choc, modifiée par un latex élastomère, comprend :

(a) une première étape, dans laquelle on prépare un latex élastomère en émulsion aqueuse, en présence d'un agent tensio-actif non ionique, d'au moins un monomère éthyléniquement insaturé ; puis

(b) une seconde étape dans laquelle on ajoute au latex ainsi obtenu au moins un monomère vinylique, insoluble dans l'eau ou faiblement soluble dans l'eau, et au moins un polymère ou copolymère à base de motifs acide carboxylique, capable de former un complexe interpolymère avec l'agent tensio-actif non ionique utilisé dans l'étape (a), puis on abaisse suffisamment le pH du mélange pour permettre la formation dudit complexe interpolymère ne stabilisant plus le latex et réaliser ainsi le transfert des particules dudit latex dans ledit (ou lesdits) monomère(s) vinylique(s) ; et

(c) dans une troisième étape, on effectue la polymérisation en suspension ou en masse de la phase constituée par ledit (ou lesdits) monomère(s) de l'étape (b) et contenant les particules de latex transférées.

De préférence, on choisit les quantités des différents monomères mis en jeu pour que la résine thermoplastique produite contienne de 1 à 90% en poids de composant élastomère.

On décrira maintenant différents modes de réalisation de chacune des étapes du procédé qui vient d'être défini sous son aspect le plus général.

Etape (a)

Le latex préparé à l'étape (a) est l'agent modificateur destiné à renforcer la matrice thermoplastique rigide. Par ailleurs, il peut avantageusement être choisi de façon à conférer de la transparence à la résine finale.

Parmi les diènes pouvant être utilisés comme monomères, on peut mentionner le butadiène, l'isoprène

2

le chloroprène et le diméthyl-2,3 butadiène. Parmi les acrylates d'alkyle également utilisables, on peut mentionner ceux qui présentent dis groupes alkyle en $C_1$-$C_{15}$, avantageusement en $C_1$-$C_8$, et, de préférence, en $C_2$-$C_8$.

En particulier, on peut citer l'acrylate de n-butyle, l'acrylate d'éthyle, l'acrylate d'éthyl-2 hexyle et l'acrylate d'isobutyle. On pourrait également mettre en oeuvre des acrylates d'alkyle dont les groupes alkyle ont une chaine plus longue. Parmi les acrylates d'aralkyle entrant dans la définition précitée, on peut citer ceux dans lesquels la partie cyclique contient 5, 6 ou 7 atomes de carbone, avec ou sans pont alkyle supplémentaire, et la partie alkyle contient jusqu'à 15 atomes de carbone. Cette liste des acrylates englobe également les acrylates substitués, tels que les acrylates d'alkylthioalkyle (acrylates d'alkylthioéthyle) et les acrylates d'alcoxyalkyle (acrylates de méthoxyéthyle). Parmi les oléfines également utilisables, on peut mentionner notamment l'éthylène, l'isobutylène et les $\alpha$-oléfines ayant de 3 à 12 atomes de carbone.

Les monomères copolymérisables, que l'on peut également mettre en oeuvre, sont choisis notamment parmi les acrylates et méthacrylates alkyliques inférieurs, les acrylates d'alcoxy inférieurs, l'acrylate de cyanéthyle, l'acrylamide, les acrylates d'hydroxyalkyle inférieurs, les méthacrylates d'hydroxyalkyle inférieurs, l'acide acrylique et l'acide méthacrylique, l'acrylonitrile, le styrène, les styrènes substitués et les méthacrylates alkyliques. On peut citer en particulier le styrène, l'acrylonitrile et le méthacrylate de méthyle.

Comme il est bien connu, lorsque le latex est préparé essentiellement à partir de diènes ou d'acrylates, il est obtenu directement par polymérisation en émulsion de ces monomères. En revanche, lorsque le latex est constitué essentiellement à partir d'oléfines, tel que polyisobutylène, caoutchouc éthylène-propylène ou éthylène-propylène-diène, on prépare d'abord ces polymères par voie cationique ou par catalyse Ziegler-Natta, puis on les dissout dans un solvant, qui est ensuite évaporé après addition d'eau et de tensio-actif.

L'agent tensio-actif non ionique en présence duquel est effectuée la polymérisation de l'étape (a) peut notamment comporter des motifs oxyde d'alkylène, ou bien des motifs oxazoline.

Parmi les agents tensio-actifs polyoxyalkylénés, utilisables, on peut citer les agents tensio-actifs alkylphénylpolyoxyéthylénés, les copolymères styrène-oxyde d'éthylène, les copolymères oxyde de propylène-oxyde d'éthylène et les esters d'alkyle polyoxyéthylénés.

Par ailleurs, toujours à l'étape (a), on peut ajouter aux monomère(s) mis en oeuvre, au moins un monomère de réticulation, en une quantité allant jusqu'à 20 parties en poids pour 100 parties en poids dudit (ou desdits) monomère(s).

Les monomères de réticulation sont choisis parmi les monomères généralement utilisés dans ce but et notamment parmi les polyméthacrylates et polyacrylates de polyols, comme les diméthacrylates d'alkylène-glycol, tels que le diméthacrylate d'éthylène-glycol, le diméthacrylate de butylène-glycol-1,3 et le diméthacrylate de propylène-glycol, les diacrylates d'alkylène-glycol, tels que le diacrylate d'éthylène-glycol, le diacrylate de butylène-glycol-1,3 ou -1,4, et le triméthacrylate de triméthylol-propane, les polyvinyl-benzènes, tels que le divinyl-benzène ou le trivinyl-benzène ; l'éthylvinylbenzène ; et l'acrylate et le méthacrylate de vinyle.

Egalement, toujours à l'étape (a), on peut ajouter au(x) monomère(s) mis en oeuvre, au moins un monomère de greffage, en une quantité allant jusqu'à 10 parties en poids, par exemple en une quantité de 0,5 à 10 parties en poids, pour 100 parties en poids dudit (ou desdits) monomère(s). L'utilisation au moins d'un monomère de greffage est préférée notamment dans le cas où les monomères de base sont autres que le butadiène et les butadiènes substitués.

Les monomères de greffage laissent, après la polymérisation, des insaturations résiduelles qui permettront le greffage du polymère formé à l'étape ultérieure, que ce soit à l'étape facultative (a1) décrite plus loin, ou bien à l'étape (b).

Les monomères de greffage sont choisis parmi les monomères généralement utilisés dans ce but, et, notamment, parmi les esters copolymérisables d'allyle, de méthallyle ou de crotyle d'acides ou diacides carboxyliques à insaturation $\alpha$, $\beta$, comme les esters allylique, méthallylique et crotylique de l'acide acrylique, de l'acide méthacrylique, de l'acide maléique (mono- et di-esters), de l'acide fumarique (mono- et di-esters) et de l'acide itaconique (mono- et di-esters) ; l'éther d'allyle, l'éther de méthallyle et l'éther de crotyle et de vinyle ; le thioéther d'allyle, le thioéther de méthallyle et le thioéther de crotyle et de vinyle ; le N-allyl-, le méthallyl- ou le crotyl-maléimide ; les esters vinyliques de l'acide 3-buténoïque et de l'acide 4-penténoïque ; le cyanurate de triallyle ; le phosphate de O-allyle, de méthallyle ou de crotyl-O-alkyle, d'aryle, d'alkaryle ou d'aralkyl-P-vinyle, d'allyle ou de méthallyle ; le phosphate de triallyle, de triméthallyle ou de tricrotyle ; le phosphate de O-vinyle, de O, O-diallyle, de diméthallyle ou de dicrotyle ; les esters cycloalcényliques de l'acide acrylique, de l'acide méthacrylique, de l'acide maléique (mono- et di-esters), de l'acide fumarique (mono- et di-esters), de l'acide itaconique (mono- et di-esters), tels que l'acrylate de 2-, 3- ou 4-cyclohexényle ; les esters bicyclo-(2,2,1)-hept-5-ène-2-yliques de l'acide acrylique, de l'acide méthacrylique, de l'acide maléique (mono- et di-esters), de l'acide fumarique (mono- et di-esters) et de l'acide itaconique (mono- et di-esters) ; les éthers vinyliques et les thio-éthers vinyliques des cycloalcénols et des cycloalcène-thiols, tels que l'éther de vinyle et de cyclohex-4-ène-1-yle, l'éther vinylique de bicyclo-(2,2,1)-hept-5-ène-2-ol ; les esters vinyliques des acides cycloalcène-carboxyliques, tels que l'acide vinylcyclo-hex-3-ène-1-carboxylique et le bicyclo-(2,2,1)-hept-5-ène-2-carboxylate de vinyle.

Parmi les monomères de greffage, on préfère des composés contenant au moins un groupe allyle, en particulier les esters allyliques des acides à insaturation éthylénique. Ceux qu'on préfère le plus sont l'acrylate d'allyle, le méthacrylate d'allyle, le maléate de diallyle, le fumarate de diallyle, l'itaconate de diallyle, le maléate acide d'allyle, le fumarate acide d'allyle et l'itaconate acide d'allyle. On utilise aussi avantageusement les esters diallyiques des acides polycarboxyliques qui ne contiennent pas d'insaturation polymérisable.

Par ailleurs, on fait généralement suivre l'étape (a) par une étape (a1) complémentaire, qui consiste en une polymérisation en émulsion, avec le latex obtenu à l'étape (a), d'au moins un monomère à insaturation monoéthylénique, apartenant à la famille des monomères introduits à l'étape (b), des exemples de tels monomères étant donnés ci-après dans l'exposé concernant l'étape (b). Le but est de venir «greffer» à la surface des particules élastomères du latex de l'étape (a), un polymère de compatibilisation avec la résine thermoplastique. Dans ce qui suit, on désignera donc ces monomères par l'expression «monomères de compatibilisation». En outre, les expressions «particules greffées, latex greffé» utilisées ci-après signifient que cette étape (a1) a eu lieu.

Dans le cas où l'on met en oeuvre l'étape (a1), il est souhaitable qu'à l'étape (a), on ait utilisé au moins un monomère de greffage, laissant, après polymérisation, des insaturations résiduelles favorisant le greffage lors de cette étape (a1).

On utilise avantageusement pour la polymérisation de l'étape (a1), un (ou des) monomère(s) de compatibilisation de même nature que celui (ou ceux) utilisé(s) à l'étape (b). Des exemples de tels monomères seront donnés ci-après.

En outre, à cette étape (a1), on utilise avantageusement, pour 100 parties en poids du mélange latex + monomère(s) de compatibilisation, de 99 à 15 parties en poids de la partie solide dudit latex et de 1 à 85 parties en poids dudit (ou desdits) monomère(s) de compatibilisation.

Par ailleurs, toujours à l'étape (a1) on peut ajouter au(x) monomère(s) mis en oeuvre, au moins un monomère de réticulation en une quantité allant jusqu'à 5 parties en poids pour 100 parties en poids dudit (desdits) monomère(s). Les monomères de réticulation à utiliser sont les mêmes que ceux indiqués ci-dessus.

On peut également, au cours de l'étape (a1), ajouter au moins un monomère de greffage, tel que précédemment défini.

Les polymérisations en émulsion de ces étapes (a) et (a1), effectuées en présence d'un initiateur de radicaux libres (persulfates par exemple) ne nécessitent pas de conditions réactionnelles inhabituelles et tous les ingrédients connus de l'homme du métier peuvent être employés.

Etape (b)

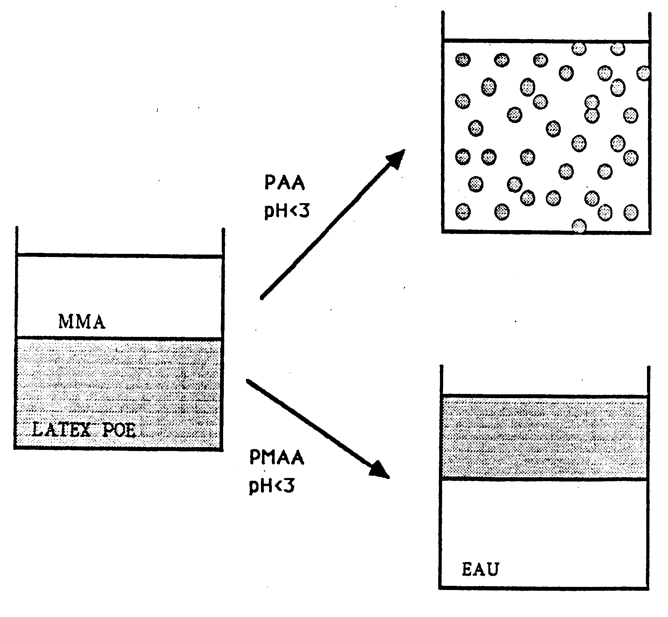

Cette étape constitue l'étape de transfert des particules de latex obtenues à l'étape précédente dans le (ou les) monomère(s) destiné(s) à constituer la matrice. Le principe de ce transfert est schématisé sur la figure 1.

Le (ou les) monomère(s), ainsi qu'une solution de polymère ou copolymère à base de motifs acide carboxylique, sont ajoutés au latex de polymère élastomère obtenu à la fin de l'étape (a) ou (a1), et le mélange est suffisamment agité. Les particules de latex sont transférées intégralement et instantanément dans le (ou les) monomère(s) par ajout d'un acide, tel que, par exemple, l'acide chlorhydrique, abaissant le pH du mélange suffisamment pour permettre la formation de complexes interpolymères (par liaisons hydrogène) ne stabilisant plus le latex.

Parmi les monomères de base mis en oeuvre à cette étape (b), lesquels sont insolubles ou faiblement solubles dans l'eau, on peut mentionner les méthacrylates d'alkyle, comme le méthacrylate de méthyle, que l'on préfère, le méthacrylate d'isopropyle, le méthacrylate de butyle secondaire, le méthacrylate de tertio-butyle, le styrène et les styrènes substitués, comme l'$\alpha$-méthylstyrène, le monochlorostyrène et le tertiobutylstyrène.

Quant aux comonomères à insaturation monoéthylénique que l'on peut introduire à cette étape, on peut citer ceux indiqués ci-dessus pour la préparation du latex de l'étape (a).

On peut également mettre en oeuvre, dans cette étape (b), les halogénures de vinyle, en particulier, le chlorure de vinyle. Les comonomères à insaturation monoéthylénique que l'on peut alors mettre en oeuvre sont les esters vinyliques, tels que l'acétate de vinyle, le butyrate de vinyle, le chloroacétate de vinyle, le chloropropionate de vinyle, le benzoate de vinyle, le chlorobenzoate de vinyle et autres, ainsi que les acides acryliques et α-acryliques, tels que l'acide acrylique et l'acide méthacrylique, l'acrylate de méthyle, l'acrylate d'éthyle, l'acrylate de butyle, le méthacrylate de méthyle, l'acrylamide, le N-méthylacrylamide, le méthacrylamide.

A cette étape (b), on utilise généralement au moins 10 parties en poids du (ou des) monomère(s) pour 100 parties en poids de la partie solide du latex obtenu à la fin de l'étape (a) ou (a1).

A titre d'exemples de polymères ou copolymères à base de motifs acide carboxylique utilisables à l'étape (b), on peut citer l'acide polyméthacrylique ou l'acide polyacrylique ou un copolymère comprenant une forte proportion d'acide méthacrylique et une faible proportion de méthacrylate de méthyle.

Lorsque l'agent tensio-actif non ionique mis en oeuvre est de nature polymère, la quantité de polymère ou copolymère à base de motifs acide carboxylique à ajouter doit être supérieure à une valeur critique correspondant à la complexation des motifs dudit polymère présents sur le latex par les motifs acide carboxylique ; la stoechiométrie du complexe formé est de 1:1.

Le transfert de l'étape (b) est généralement effectué à température allant de 0°C à environ 100°C. Toutefois, la température n'est pas un facteur déterimant dans cette étape.

On obtient ainsi une phase organique de monomère(s) contenant les particules de polymère élastomère, éventuellement greffé, dans un état gonflé et étant bien dispersées de manière homogène, la phase aqueuse étant devenue pratiquement limpide.

Selon l'emploi d'acide polyacrylique ou d'acide polyméthacrylique, cette phase organique de monomère(s) contenant les particules de polymère élastomère éventuellement greffé peut se présenter de façon différente, ce qui est illustré sur la figure unique du dessin annexé, sur laquelle l'expression "LATEX POE" désigne le latex obtenu à la première étape avec utilisation d'un agent tensio-actif polyoxyéthyléné, et "MMA" désigne le monomère méthacrylate de méthyle utilisé ici à titre d'exemple pour la constitution de la matrice.

Cas 1 : Formation des complexes interpolymères à l'aide de l'acide polyméthacrylique.

Lorsque de l'acide polyméthacrylique (PMAA) est utilisé pour déstabiliser le latex de polymère élastomère éventuellement greffé, la phase organique obtenue après transfert des particules se sépare de la phase aqueuse sous la forme d'une couche (voir partie inférieure de la figure unique). Sa viscosité dépendra de l'indice de gonflement des particules de polymère élastomère dans le(s) monomère(s) utilisé-(s), ainsi que de leur concentration. Elle pourra ainsi être plus ou moins fluide - auquel cas une polymérisation en suspension ultérieure pourra avoir lieu à l'étape (c) -, ou plus ou moins pâteuse - auquel cas il sera préférable d'effectuer, à l'étape (c), une polymérisation en masse, après séparation de l'eau.

Cas 2 : Formation des complexes interpolymères à l'aide de l'acide polyacrylique.

Lorsque de l'acide polyacrylique (PAA) est utilisé pour déstabiliser le latex de polymère élastomère éventuellement greffé, la phase organique contenant les particules transférées est auto-dispersée (voir partie supérieure de la figure unique), quelle que soit la concentration desdites particules, en perles de 20 μm à 200 μm selon sa viscosité, la température, l'intensité et le type d'agitation. La stabilisation des perles est assurée par le pouvoir émulsifiant du complexe poly(oxyde d'éthylène)-acide polyacrylique. Cette auto-dispersion de la phase du (ou des) monomère(s) contenant les particules de polymère élastomère est très intéressante, car elle permet de réaliser directement une polymérisation en suspension à l'étape (c).

Quand le transfert de l'étape (b) a eu lieu, il est naturellement encore possible de régler le rapport en poids résine thermoplastique finale/élastomère éventuellement greffé, en diluant la phase organique avec du (ou des) monomère(s) devant servir à constituer la matrice.

Etape (c)

L'étape (c) du procédé selon l'invention est la polymérisation en suspension ou en masse. De telles polymérisations s'effectuent dans les conditions connues d'agitation, de température et de temps de réaction.

Dans le cas d'une polymérisation en suspension, la dispersion obtenue à l'issue de l'étape (b), est chauffée, de préférence, entre 60 et 100°C, pendant un temps suffisant pour obtenir une polymérisation complète des monomères, à une vitesse d'agitation de l'ordre de 300-400 t/mn, sous atmosphère d'azote. Les temps de polymérisation sont dépendants du taux de composants caoutchouteux présent et sont généralement de l'ordre de 3 à 5 heures. Le rapport phase dispersée/phase aqueuse est généralement compris entre 0,1 et 1,5. Par ailleurs, on peut ajouter, au cours de la polymérisation, des agents dispersants et des sels minéraux, afin d'obtenir une taille de perles idéale (environ 200-300 $\mu$m). La réaction achevée, le réacteur est vidé, puis, après décantation, lavages et séchage, on récupère la résine thermoplastique renforcée sous forme de perles.

Les agents dispersants que l'on peut utiliser lors de la polymérisation en suspension de l'étape (c) sont notamment l'hydroxyéthylcellulose, la méthylcellulose, l'alcool polyvinylique, les gélatines, les alginates hydrosolubles, les copolymères d'acide(s) (méth)acryliques et de méthacrylate de méthyle, les copolymères contenant des motifs hydrophobes et hydrophiles en général, l'agent de dispersion préféré étant le polyalcool vinylique. Les agents dispersants sont, en général, employés en solution aqueuse, à raison de 0,05 à 3% en poids par rapport à la résine finale.

Dans le cas d'une polymérisation en masse, il est nécessaire de séparer l'eau par décantation et centrifugation à l'issue de l'étape (b). La polymérisation est généralement réalisée à une température allant de 50°C à 200°C.

Pour mieux illustrer l'objet de l'invention, on va en décrire maintenant, sous forme d'exemples purement illustratifs et non limitatifs, plusieurs modes de mise en oeuvre.

Exemple 1

Cet exemple concerne la préparation d'un alliage du type poly(méthacrylate de méthyle) choc, contenant 30,4% en poids d'un polymère élastomère greffé.

Etape (a) : Préparation d'un latex de copolymère acrylate de butyle-styrène par copolymérisation en émulsion.

Les matières utilisées dans cette polymérisation sont les suivantes :

| Matières | Quantités introduites (parties en poids) |
|---|---|
| Acrylate de butyl ... | 80,7 |
| Styrène ... | 19,3 |
| Octylphénylhydroxypolyoxyéthylène à 30 motifs d'oxyde d'éthylène commercialisé sous la dénomination "TRITON X305" ... | 2,2 (partie solide) |
| Diméthacrylate d'éthylène glycol (monomère de réticulation) ... | 3,3 |
| Persulfate de potassium ... | 0,41 |
| Eau désionisée présente ... | 339 |

Dans un récipient de réaction en verre, pourvu d'un agitateur, on mélange l'eau et l'octylphénylhydroxypolyoxyéthylène, et on porte le mélange obtenu à 70°C. On ajoute l'acrylate de butyle, le styrène et le monomère de réticulation, puis le persulfate de potassium en solution aqueuse. On agite le mélange résultant à une vitesse de l'ordre de 250 tours/minute en maintenant la température à 70°C. La durée de la polymérisation est fixée à 4 heures. Le latex obtenu présente un extrait sec de 22,8% en poids et un diamètre moyen des particules de 330 nm.

Etape (a1) : Greffage de poly(méthacrylate de méthyle) sur le latex obtenu à l'étape (a).

Les matières utilisées dans cette polymérisation avec greffage sont les suivantes :

| Matières | Quantités introduites (parties en poids) |
|---|---|
| Latex obtenu à l'étape (a) ... | 114 (exprimé en partie solide) |
| Méthacrylate de méthyle ... | 17,7 |
| Persulfate de potassium ... | 0,15 |
| Eau distillée présente ... | 446 |
| Diméthacrylate d'éthylène-glycol ... | 0,05 |

On réalise cette polymérisation dans un récipient de réaction en verre, pourvu d'un agitateur, sous atmosphère d'azote, à 70°C, pendant 2 heures.

Le latex acrylique greffé obtenu présente un extrait sec de 22,6% et un diamètre moyen des particules de 340 nm ; 1 gramme du latex aqueux contient $8,27 \times 10^{-5}$ mole de motifs oxyde d'éthylène.

Etape (b) : Transfert des particules du latex acrylique greffé obtenu à l'étape (a1) dans du méthacrylate de méthyle.

A 195 parties en poids du latex obtenu à l'étape (a1), on ajoute 100 parties en poids de méthacrylate de méthyle, 0,3 partie en poids de laurylmercaptan, 0,7 partie en poids de peroxyde de lauroyle et 1,04 partie en poids d'acide polyacrylique (de masse molaire moyenne en poids de 25 000) dans 82 parties en poids d'eau, et on agite le mélange résultant.

Ensuite, on ajoute 15 parties en poids d'une solution d'acide chlorhydrique 0,5 N, faisant apparaître une dispersion de particules, d'un diamètre moyen de l'ordre de 100 $\mu$m, de méthacrylate de méthyle contenant les particules du latex acrylique greffé. Le pH du mélange est de 1,5.

Etape (c) : Polymérisation de la dispersion obtenue à l'étape (b).

On effectue une polymérisation en supension, à 60°C pendant 3 heures, puis à 80°C pendant 1 heure, en présence d'agents de suspension et de salinité classiques, de la dispersion obtenue à l'étape (b). On récupère ensuite les perles et on les traite de façon habituelle.

Exemple 2 :

Cet exemple concerne la préparation d'un alliage du type styrène-acrylonitrile choc, contenant 53,6% en poids de polymère élastomère acrylique greffé.

Etape (a) : Préparation d'un latex de copolymère acrylate de butyle-styrène par copolymérisation en émulsion

Les matières utilisées dans cette polymérisation sont les suivantes :

| Matières | Quantités introduites (parties en poids) |
|---|---|
| Acrylate de butyle ... | 80,7 |
| Styrène ... | 19,3 |
| Octylphénylhydroxypolyoxyéthylène à 40 motifs d'oxyde d'éthylène, commercialisé sous la dénomination "TRITON X405" ... | 2,2 (partie solide) |
| Monomère de réticulation ... | 3,3 |
| Persulfate de potassium ... | 0,41 |
| Eau désionisée présente ... | 336 |

On procède comme à l'étape (a) de l'Exemple 1, mais à 64°C pendant 5 heures, de façon à obtenir un latex qui présente un extrait sec de 21,3% en poids et un diamètre moyen des particules de 286 nm.

Etape (a1) : Greffage de poly(méthacrylate de méthyle) sur le latex obtenu à l'étape (a).

Les matières utilisées dans cette polymérisation avec greffage sont les suivantes.

| Matières | Quantités introduites (parties en poids) |
|---|---|
| Latex obtenu à l'étape (a) ... | 42,6 (exprimé en partie solide) |
| Octylphénylhydroxypolyoxyéthylène à 40 motifs d'oxyde d'éthylène, commercialisé sous la dénomination "TRITON X405" ... | 0,376 (exprimé en partie solide) |
| Styrène ... | 9,28 |
| Acrylonitrile ... | 3,72 |
| Persulfate de potassium ... | 0,15 |
| Eau désionisée présente ... | 177 |
| Divinylbenzène ... | 0,1 |

On effectue cette polymérisation à 70°C, pendant 3 heures. Le latex acrylique greffé obtenu présente un extrait sec de 23,6% et un diamètre moyen des particules de 306 nm. 1 gramme de latex aqueux contient $1,19 \times 10^{-4}$ mole de motifs oxyde d'éthylène.

Etape (b) : Transfert des particules d'élastomère acrylique greffé dans un mélange styrène-acrylonitrile.

A 170 parties en poids du latex obtenu à l'étape (a1), on ajoute 24,5 parties en poids de styrène, 9,7 parties en poids d'acrylonitrile, 0,1 partie en poids de laurylmercaptan, 0,37 partie en poids de peroxyde de lauroyle et 1,378 partie en poids d'acide polyacrylique (de masse molaire moyenne en poids de 25 000) dans 65,6 parties en poids d'eau. On agite le mélange ainsi obtenu.

On y ajoute ensuite 10 parties en poids d'une solution d'acide chlorhydrique 1 N, faisant apparaître une dispersion de particules, d'un diamètre moyen de l'ordre de 50-100 μm, de styrène-acrylonitrile contenant les particules du polymère élastomère acrylique greffé obtenu à l'étape (a1).

Etape (c) : Polymérisation en suspension de la dispersion obtenue à l'étape (b).

On chauffe la dispersion obtenue à l'étape (b) en l'espace de 30 minutes, à 62°C, après y avoir ajouté 1,05 partie en poids de chlorure de potassium et de 0,055 partie en poids d'alcool polyvinylique commercialisé sous la dénomination "RHODOVIOL 135". On effectue la polymérisation pendant 5 heures, à 62°C. On récupère ensuite les perles et on les traite de la façon habituelle.

**Revendications**

1. Procédé de fabrication d'une résine thermoplastique résistante au choc, modifiée par un latex élastomère, comprenant :

(a) une première étape, dans laquelle on prépare un latex élastomère en émulsion aqueuse, en présence d'un agent tensio-actif non ionique, d'au moins un monomère éthyléniquement insaturé ; puis

(b) une seconde étape dans laquelle on ajoute au latex ainsi obtenu au moins un monomère vinylique, insoluble dans l'eau ou faiblement soluble dans l'eau, et au moins un polymère ou copolymère à base de motifs acide carboxylique, capable de former un complexe inter-polymère avec l'agent tensio-actif non ionique utilisé dans l'étape (a), puis on abaisse suffisamment le pH du mélange pour permettre la formation dudit complexe interpolymère ne stabilisant plus le latex et réaliser ainsi le transfert des particules dudit latex dans ledit (ou lesdits) monomère(s) vinylique(s) ; et

(c) dans une troisième étape, on effectue la polymérisation en suspension ou en masse de la phase constituée par ledit (ou lesdits) monomère(s) de l'étape (b) et contenant les particules de latex transférées.

2. Procédé selon la revendication 1, caractérisé par le fait qu'on choisit les quantités des différents monomères mis en jeu pour que la résine thermoplastique produite contienne de 1 à 90% en poids de composant élastomère.

3. Procédé selon la revendication 1 et 2, caractérisé par le fait qu'à l'étape (a), on choisit un agent tensio-actif non ionique comportant des motifs oxyde d'alkylène ou des motifs oxazoline.

**4.** Procédé selon la revendication 3, caractérisé par le fait qu'on choisit les agents tensio-actifs non ioniques polyoxyalkylénés parmi les agents tensio-actifs alkylphénylpolyoxyéthylénés, les copolymères styrène-oxyde d'éthylène, les copolymères oxyde de propylène-oxyde d'éthylène et les esters d'alkyle polyoxyéthylénés.

**5.** Procédé selon l'une des revendications 1 à 4, caractérisé par le fait qu'on fait suivre l'étape (a) par une étape complémentaire (a1) consistant en une polymérisation en émulsion, avec le latex obtenu à l'étape (a), d'au moins un monomère à insaturation éthylénique, dit «monomère de compatibilisation» appartenant à la famille des monomères introduits à l'étape (b).

**6.** Procédé selon la revendication 5, caractérisé par le fait que, pour la polymérisation de l'étape (a1), on utilise un (ou des) monomère(s) de compatibilisation de même nature que celui (ou ceux) utilisé(s) à l'étape (b).

**7.** Procédé selon l'une des revendications 5 et 6, caractérisé par le fait qu'à l'étape (a1), on utilise, pour 100 parties en poids du mélange latex + monomère(s) de compatibilisation, de 99 à 15 parties en poids de la partie solide dudit latex et de 1 à 85 parties en poids dudit (ou desdits) monomère(s) de compatibilisation.

**8.** Procédé selon l'une des revendications 1 à 7, caractérisé par le fait qu'à l'étape (a) et/ou à l'étape (a1), on ajoute au(x) monomère(s) mis en oeuvre, au moins un monomère de greffage, en une quantité allant jusqu'à 10 parties en poids, pour 100 parties en poids dudit (ou desdits) monomère(s).

**9.** Procédé selon l'une des revendications 1 à 8, caractérisé par le fait qu'à l'étape (a), on ajoute au(x) monomère(s) au moins un monomère de réticulation, en une quantité allant jusqu'à 20 parties en poids pour 100 parties en poids dudit (ou desdits) monomère(s), et, le cas échéant, à l'étape (a1), si par ailleurs une telle étape est prévue, on ajoute au(x) monomère(s) au moins un monomère de réticulation en une quantité allant jusqu'à 5 parties en poids pour 100 parties en poids dudit (ou desdits) monomère(s) introduit(s) à cette étape.

**10.** Procédé selon l'une des revendications 1 à 9, caractérisé par le fait qu'à l'étape (b), on introduit au moins 10 parties en poids du (ou des) monomère(s) pour 100 parties en poids de la partie solide du latex obtenu à la fin de l'étape (a) ou (a1).

**11.** Procédé selon l'une des revendications 1 à 10, caractérisé par le fait qu'à l'étape (b), on utilise l'acide polyacrylique comme polymère à base de motifs acide carboxylique.

**12.** Procédé selon l'une des revendications 1 à 11, caractérisé par le fait que l'agent tensio-actif est de nature polymère et qu'à l'étape (b), on ajoute une quantité de polymère ou copolymère à base de motifs acide carboxylique, qui est supérieure à une valeur critique correspondant à la complexation des motifs dudit polymère présents sur le latex par les motifs acide carboxylique.

**13.** Procédé selon l'une des revendications 1 à 12, caractérisé par le fait qu'on réalise le transfert de l'étape (b) à une température allant de 0 à 100°C.

**14.** Résine thermoplastique résistante au choc, modifiée par un latex polymère, obtenue par le procédé tel que défini à l'une des revendications 1 à 13.

## Claims

**1.** Process for the manufacture of an impact-resistant thermoplastic resin modified with an elastomeric latex, comprising:

(a) a first step, in which an elastomeric latex is prepared in aqueous emulsion in the presence of a nonionic surface-active agent from at least one ethylenically unsaturated monomer; and then

(b) a second step in which at least one water-insoluble or poorly water-soluble vinyl monomer and at least one polymer or copolymer based on carboxylic acid units and capable of forming an interpolymer complex with the nonionic surface-active agent employed in step (a) are added to the latex thus obtained, and the pH of the mixture is then lowered sufficiently to allow the formation of the said interpolymer complex which no longer stabilises the latex and thus to carry out the transfer of particles of the said latex into the said vinyl monomer(s), and

(c) in a third step, the suspension or bulk polymerisation of the phase consisting of the said monomer(s) from step (b) and containing the transferred latex particles is performed.

2. Process according to Claim 1, characterised in that the quantities of the various monomers employed are chosen so that the thermoplastic resin produced contains from 1 to 90% by weight of elastomeric component.

3. Process according to Claim 1 and 2, characterised in that in step (a) a nonionic surface-active agent which contains alkylene oxide or oxazoline units is chosen.

4. Process according to Claim 3, characterised in that the polyoxyalkylenated nonionic surface-active agents are chosen from alkylphenylpolyoxyethylenated surface-active agents, styrene-ethylene oxide copolymers, propylene oxide-ethylene oxide copolymers and polyoxyethylenated alkyl esters.

5. Process according to one of Claims 1 to 4, characterised in that step (a) is followed by a complementary step (a1) consisting of an emulsion polymerisation, with the latex obtained in step (a), of at least one ethylenically unsaturated monomer, called "compatibilising monomer", belonging to the class of the monomers introduced in step (b).

6. Process according to Claim 5, characterised in that one (or more) compatibilising monomer(s) of the same kind as that (or those) employed in step (b) is (are) employed for the polymerisation in step (a1).

7. Process according to either of Claims 5 and 6, characterised in that, in step (a1), there are employed, per 100 parts by weight of the latex + compatibilising monomer(s) mixture, from 99 to 15 parts by weight of the solid part of the said latex and from 1 to 85 parts by weight of the said compatibilising monomers(s).

8. Process according to one of Claims 1 to 7, characterised in that, in step (a) and/or in step (a1), at least one grafting monomer is added to the monomer(s) employed, in a quantity ranging up to 10 parts by weight per 100 parts by weight of the said monomer(s).

9. Process according to one of Claims 1 to 8, characterised in that, in step (a), at least one crosslinking monomer is added to the monomer(s), in a quantity ranging up to 20 parts by weight per 100 parts by weight of the said monomer(s) and, where appropriate in step (a1), when such a step is envisaged furthermore, at least one crosslinking monomer is added to the monomer(s), in a quantity ranging up to 5 parts by weight per 100 parts by weight of the said monomer(s) introduced in this step.

10. Process according to one of Claims 1 to 9, characterised in that, in step (b), at least 10 parts by weight of the monomer(s) are added per 100 parts by weight of the solid part of the latex obtained at the end of step (a) or (a1).

11. Process according to one of Claims 1 to 10, characterised in that in step (b) polyacrylic acid is employed as the polymer based on carboxylic acid units.

12. Process according to one of Claims 1 to 11, characterised in that the surface-active agent is of a polymeric nature and in that in step (b) a quantity of polymer or copolymer based on carboxylic acid units is added which is greater than a critical value corresponding to the complexing of the units of the said polymer which are present on the latex by the carboxylic acid units.

13. Process according to one of Claims 1 to 12, characterised in that the transfer in step (b) is carried out at a temperature ranging from 0 to 100°C.

14. Impact-resistant thermoplastic resin modified with a polymer latex, which resin is obtained by the process such as defined in one of Claims 1 to 13.

**Patentansprüche**

10

1. Verfahren zur Herstellung eines thermoplastischen, schlagfesten, durch einen Elastomerlatex modifizierten Harzes, enthaltend:

a) einen ersten Schritt, in dem man einen Elastomerlatex in wäßriger Emulsion in Gegenwart eines nichtionischen, oberflächenaktiven Mittels und wenigstens eines ethylenisch ungesättigten Monomeren herstellt; dann

b) einen zweiten Schritt, in dem man dem so erhaltenen Latex wenigstens ein nicht oder kaum wasserlösliches Vinylmonomeres, und wenigstens ein Polymeres oder Copolymeres auf der Grundlage von Carbonsäure-Struktureinheiten zugibt, das in der Lage ist, mit dem nichtionischen, oberflächenaktiven Mittel aus Schritt (a) einen interpolymeren Komplex zu bilden, dann den pH-Wert des Gemisches ausreichend senkt, um die Bildung des interpolymeren, den Latex nicht mehr stabilisierenden Komplexes und dadurch die Übertragung der Latexteilchen in den (die) Vinylmonomeren zu ermöglichen; und

c) einen dritten Schritt, in dem man die Suspension-oder Masse-Polymerisation der Phase durchführt, die durch das (die) Monomere(n) aus Schritt (b) besteht und die übertragenen Latexteilchen enthält.

2. Verfahren nach Anspruch 1, dadurch gekennzeichnet, daß man die Mengen der verschiedenen verwendeten Monomeren so auswählt, daß das hergestellte, thermoplastische Harz 1 bis 90 Gewichtsprozent des Elastomerbestandteils enthält.

3. Verfahren nach Anspruch 1 und 2, dadurch gekennzeichnet, daß man in Schritt (a) ein nichtionisches, oberflächenaktives Mittel auswählt, das Struktureinheiten von Alkylenoxid oder Oxazolin enthält.

4. Verfahren nach Anspruch 3, dadurch gekennzeichnet, daß man die nichtionischen, polyoxyalkylenischen, oberflächenaktiven Mittel aus alkylphenylpolyoxyethylenischen oberflächenaktiven Mitteln, Copolymeren aus Styrol-Ethylenoxid, Copolymeren von Propylenoxid und Ethylenoxid und polyoxethylierten Alkylestern auswählt.

5. Verfahren nach einem der Ansprüche 1 bis 4, dadurch gekennzeichnet, daß man auf Schritt (a) einen zusätzlichen Schritt (a1) folgen läßt, der aus einer Emulsionspolymerisation des im Schritt (a) erhaltenen Latex mit wenigstens einem ethylenisch ungesättigten Monomeren besteht, wobei das "Kompatibilitätsmonomere" zur Gruppe der Monomeren gehört, die in Schritt (b) eingesetzt werden.

6. Verfahren nach Anspruch 5, dadurch gekennzeichnet, daß man für die Polymerisation von Schritt (a1) ein oder mehrere Kompatibilitätsmonomere von gleicher Art wie das (die) in Schritt (b) eingesetzte(n) verwendet.

7. Verfahren nach Anspruch 5 oder 6, dadurch gekennzeichnet, daß man in Schritt (a1) auf 100 Gewichtsteile des Latex-Kompatibilitätsmonomer-Gemisches 99 bis 15 Gewichtsteile des festen Teils des Latex und 1 bis 85 Gewichtsteile des (der) Kompatibilitätsmonomeren verwendet.

8. Verfahren nach einem der Ansprüche 1 bis 7, dadurch gekennzeichnet, daß man in Schritt (a) und/oder Schritt (a1) dem (den) verwendeten Monomeren wenigstens ein Propfmonomer in einer Menge zufügt, die bis zu 10 Gewichtsteilen auf 100 Gewichtsteile des (der) Monomeren reicht.

9. Verfahren nach einem der Ansprüche 1 bis 8, dadurch gekennzeichnet, daß man in Schritt (a) dem (den) Monomeren wenigstens ein Vernetzungsmonomeres in einer Menge zufügt, die bis zu 20 Gewichtsteilen auf 100 Gewichtsteile des (der) Monomeren reicht, und gegebenenfalls in Schritt (a1), falls dieser Schritt vorgesehen ist, dem (den) Monomeren wenigstens ein Vernetzungsmonomeres in einer Menge zufügt, die bis 5 Gewichtsteile auf 100 Gewichtsteile des (der) in diesem Schritt eingesetzten Monomeren reicht.

10. Verfahren nach einem der Ansprüche 1 bis 9, dadurch gekennzeichnet, daß man in Schritt (b) wenigstens 10 Gewichtsteile des (der) Monomeren auf 100 Gewichtsteile des festen Teils des Latex einsetzt, der am Ende von Schritt (a) oder (a1) erhalten wird.

11. Verfahren nach einem der Ansprüche 1 bis 10, dadurch gekennzeichnet, daß man in Schritt (b) Polyacrylsäure als Polymeres mit Carbonsäure-Struktureinheiten verwendet.

12. Verfahren nach einem der Ansprüche 1 bis 11, dadurch gekennzeichnet, daß das oberflächenaktive Mittel ein Polymeres ist und daß man in Schritt (b) eine Polymer- oder Copolymermenge mit Carbonsäure-Struktureinheiten zugibt, die über einem kritischen Wert liegt, der der Komplexierung der Polymerstruktureinheiten entspricht, die auf dem Latex durch die Carbonsäure-Struktureinheiten vorhanden sind.

13. Verfahren nach einem der Ansprüche 1 bis 12, dadurch gekennzeichnet, daß man die Übertragung von Schritt (b) bei einer Temperatur von 0 bis 100°C durchführt.

14. Schlagfestes, thermoplastisches Harz, modifiziert durch ein Latexpolymeres, erhalten durch das Verfahren nach einem der Ansprüche 1 bis 13.

PAA
pH<3

MMA

LATEX POE

PMAA
pH<3

EAU